# EUROPÄISCHE PATENTSCHRIFT

(11) **EP 1 663 730 B1**
(45) Veröffentlichungstag und Bekanntmachung des Hinweises auf die Patenterteilung: **13.06.2012**
(21) Anmeldenummer: 04764356.4
(22) Anmeldetag: 21.08.2004
(51) Int. Cl.: B60R 21/06

(54) **DEFORMIERBARE HALTERUNG, INSBESONDERE FÜR EIN SICHERHEITSTRENNNETZ FÜR DEN LADERAUM EINES KRAFTFAHRZEUGS**
DEFORMABLE FIXING ELEMENT, IN PARTICULAR FOR A SAFETY NET FOR THE CARGO SPACE OF A MOTOR VEHICLE
FIXATION DEFORMABLE, DESTINEE NOTAMMENT A UN FILET DE SEPARATION POUR L'ESPACE DE CHARGEMENT D'UN VEHICULE AUTOMOBILE

(30) Priorität: 05.09.2003 DE 10341411
(43) Veröffentlichungstag der Anmeldung: 07.06.2006
(73) Patentinhaber: Johnson Controls GmbH, 51399 Burscheid (DE)
(72) Erfinder: PLIKA, Aliki, 41324 Göteborg (SE); LEWIS, Richard, G., S-411 33 Göteborg (SE)
(74) Vertreter: Polypatent
(86) Internationale Anmeldenummer: PCT/EP2004/009374
(87) Internationale Veröffentlichungsnummer: WO 2005/028262

(56) Entgegenhaltungen:
- EP-A- 0 404 075
- AU-B- 697 769
- DE-A- 19 626 033
- GB-A- 1 390 889
- US-A- 3 106 989

## Beschreibung

Die Erfindung betrifft eine Halterung zur Verbindung eines ersten mit einem zweiten Bauteil, insbesondere zur Befestigung eines Sicherheitstrennnetzes im Laderaum eines Kraftfahrzeugs, die im Falle unfallbedingter Überlasten zur Energieabsorption deformierbar ist.

### Stand der Technik

Eine gattungsgemäße Halterung ist aus der Druckschrift EP 0 642 955 B1 bekannt. Sie besteht aus stabförmigen Verbindungsstreben zwischen Fahrzeugkarosserie und Sicherheitstrennnetz, die jeweils mit einem Verformungselement in Form einer kreisringförmigen Aufweitung versehen sind. Unter Überlast wird der Kreisring zu einer Ellipse verformt und nimmt dabei Energie auf.

Eine weitere Halterung nach dem Oberbegriff von Anspruch 1 wird in der Patentschrift EP 0 777 590 B1 offenbart. Diese besteht aus einer S-förmig gebogenen und im Bereich der Überlappung durch einen Spannbügel gesicherten Befestigungslasche, die sich bei einem Unfall dehnt und aus dem Spannbügel herausgezogen wird.

Aus der GB 1 390 889 ist ein Träger zur Befestigung eines Umlenkbeschlages für einen Sicherheitsgurt eines Kraftfahrzeugs bekannt, der in bekannter Weise als an der B-Säule eines Fahrzeugs befestigbarer Blechstreifen ausgebildet ist. An diesem Blechstreifen ist eine Befestigungszunge zur Aufnahme des Umlenkbeschlages vorgesehen. Die Befestigungszunge ist teilweise aus dem Blechstreifen herausgestanzt und aus diesem hervorgebogen. Die Verlängerungen der Stanzkontur der Befestigungszunge sind als Sollrisslinien ausgebildet, die bei Überbelastung des Umlenkbeschlages ein Ausreißen der Befestigungszunge aus dem Blechstreifen bis zu einem gewissen Grad ermöglichen.

Aus der DE 196 26 033 ist ein Gurthöhenversteller für einen Sicherheitsgurt bekannt, der ebenfalls eine Trägerschiene für einen Umlenkbeschlag umfasst. Die Trägerschiene weist unterhalb einer oberen Lagerbohrung für eine Befestigungsschraube eine Aufreißlasche auf, die durch einen U-förmig ausgestanzten Schlitz im Blech der Trägerschiene gebildet wird. Bei einer bestimmten Gurtbandzugkraft reißen die oberhalb gelegenen Stege zwischen weiteren Öffnungen oder Vertiefungen durch, wodurch eine Kraft-oder Lastbegrenzung im Crashfall gegeben ist.

Mittel zur Gurtlastbegrenzung im Crashfall sind beispielsweise auch bei einer in der EP 0 404 075 beschriebenen Sicherheitsgurtanordnung vorgesehen.

Eine vergleichbare Energie absorbierende Vorrichtung für Sicherheitsgurte ist aus der US 3,106,989 bekannt.

Schließlich ist aus der AU-B-28328/95 ein Schockabsorber zur Anordnung in einer Sicherungsleine als Fallschutz beschrieben.

Da einige bekannte Halterungen Energie ausschließlich durch Verformung absorbieren, müssen die zu verformenden Bereiche verhältnismäßig groß und geometrisch komplex ausgebildet werden, so dass diese Bauteile einen erheblichen Bauraum beanspruchen. Darüber hinaus sind sie optisch weniger ansprechend und relativ aufwendig zu fertigen.

### Aufgabe

Der Erfindung liegt die Aufgabe zugrunde, eine kompakte, einfach herzustellende und formschöne Halterung anzubieten, die erhebliche Energie zu absorbieren vermag.

### Lösung

Die Aufgabe wird durch die Merkmale des Anspruchs 1 gelöst. Erfindungsgemäß ist vorgesehen, dass die Halterung mit Sollbruchstellen versehen ist, entlang derer sich die mit dem erste und dem zweiten Bauteil verbundenen Bereiche der Haltung unfallbedingt örtlich voneinander trennen. Die unfallbedingt auftretenden Kräfte werden also nicht nur durch plastische Verformung, sondern insbesondere durch die zum Aufreißen der Sollbruchstellen erforderliche Energie abgebaut.

Die Sollbruchstellen sind bevorzugt als linienförmig verlaufende Kerben in einem plattenförmigen Bereich der Halterung ausgebildet. Sie können beim Stanzen der Halterung unmittelbar in diese eingeprägt werden. Selbstverständlich sind auch andere Anordnungen, beispielsweise eine linienförmige Aneinanderreihung von Sack- oder Durchgangslöchem sowie abweichende Fertigungsverfahren (Bohren, Fräsen, Erodieren oder dergleichen) denkbar.

Vorzugsweise ist der verbleibende Materialquerschnitt der Halterung im Bereich der Kerben im zuerst trennbaren Teil der Sollbruchstelle(n) geringer ist als im nachfolgend trennbaren Bereich der Sollbruchstelle(n). Hierdurch wird ein relativ leichtes Einreißen ermöglicht, während die Energieaufnahme im weiteren Verlauf des Trennens zunimmt. Hierzu ist es von Vorteil, dass der verbleibende Querschnitt der plattenförmigen Ausbildung über den Verlauf der Sollbruchstelle kontinuierlich, insbesondere linear zunimmt.

Ein vollständiges Abreißen ist naturgemäß in der Regel zu vermeiden.

Der Kraftfluß in der Halterung kann dadurch gesteuert werden, dass der zuerst trennbare Bereich der Sollbruchstelle aus einem Durchbruch durch die Halterung ausmündet.

Mit Vorteil sind die Sollbruchstellen und/oder die Durchbrüche U-förmig auf der Halterung angeordnet, wobei das erste Bauteil außerhalb der U-förmigen Anordnung und das zweite Bauteil innerhalb, und zwar jenseits der Schenkelenden der U-förmigen Anordnung, mit der Halterung verbunden sind. Durch den Trennvorgang bildet die Halterung eine plastisch herausgeformte Lasche aus, die im Bereich der Schenkelenden des "U"s noch fest mit der Halterung verbunden ist.

### Figuren

Die Figuren stellen beispielhaft und schematisch eine Ausführung der Erfindung dar.

Es zeigen:
- Fig. 1: einen Schnitt durch den Laderaum eine Kraftfahrzeugs, das mit einer Halterung für ein Sicherheitstrennnetz ausgestattet ist,
- Fig. 2: eine Aufsicht auf eine erfindungsgemäße Halterung in unverformtem Zustand,
- Fig. 3: einen ersten Querschnitt X1-X1 durch die Halterung nach Fig. 2,
- Fig. 4: einen weiteren Querschnitt X2-X2 durch die gleiche Halterung,
- Fig. 5: die Halterung nach Fig. 2 nach unfallbedingter Verformung.

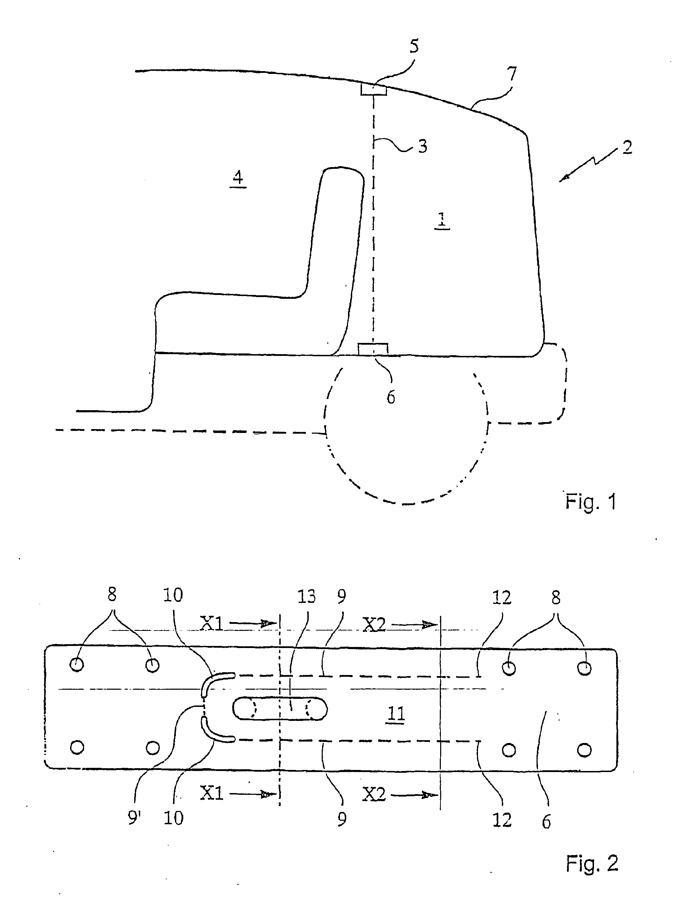

Der Laderaum 1 des in Fig. 1 dargestellten Kraftfahrzeugs 2 ist mit einem (üblicherweise herausnehmbaren) Sicherheitstrennnetz 3 zum Fahrgastraum 4 hin gesichert, so dass Ladung bei unfallbedingter Verzögerung nicht in den Fahrgastraum 4 vordringen und die Insassen verletzen kann.

Das Sicherheitstrennnetz 3 ist über obere Halterungen 5 und untere Halterungen 6, gegebenenfalls auch über nicht dargestellte seitliche Halterungen, mit der Karosserie 7 des Kraftfahrzeugs 2 verbunden. Vorzugsweise sind die unteren Halterungen 6, die keinesfalls mit den rückwärtigen Insassen in Kontakt kommen können, erfindungsgemäß gestaltet. Bei entsprechender Anordnung oder Abdeckung ist die Anwendung jedoch nicht auf diese Halterungen beschränkt.

Jede Halterung 6 besteht aus einem länglichen Blechteil, an seinen Enden mit Bohrungen 8 zur Befestigung an der Fahrzeugkarosserie, beispielsweise durch Nieten oder Schrauben, versehen ist. Zwischen den Bohrungen 8 erstreckt sich im mittleren Bereich der Halterung 6 eine U-förmige Anordnung von linienförmigen Sollbruchstellen 9, 9' und bogenförmigen Durchbrüchen 10. Die U-förmige Anordnung umgibt somit eine einstückig in die Halterung 6 integrierte Lasche 11, die an ihrem jenseits der Schenkelenden 12 befindlichen Ende mit einem Bügel 13 ausgestattet ist. In diesen wird das Sicherheitstrennnetz 3 mit einem hakenartigen Gegenstück eingehängt.

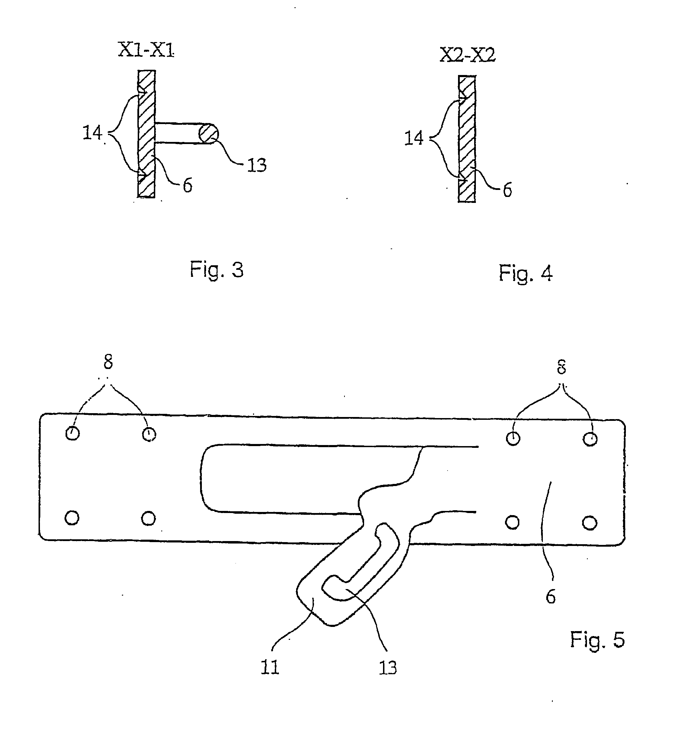

Wie aus den Querschnitten nach Fig. 3 und Fig. 4 ersichtlich, werden die Sollbruchstellen 9 (ebenso 9') durch in die Halterung eingeprägte Kerben 14 gebildet. Diese weisen im Bereich des Bügels 13 bzw. der Durchbrüche 10 (Fig. 3) eine größere Tiefe auf als im Bereich der Schenkelenden 12 (Fig. 4), so dass der verbleibende Materialquerschnitt vom Bügel 13 zu den Schenkelenden 12 hin abnimmt.

Selbstverständlich können die Kerben 14 auch auf beide Flächenseiten der Halterung 6 eingeprägt werden, aus optischen Gründen ist jedoch eine Anordnung auf einer, nach der Montage nicht mehr sichtbaren Flächenseite zu bevorzugen.

Bei unfallbedingter Überlast wirkt auf die Halterung eine Kraft, deren orthogonal zur Oberfläche der Halterung ausgerichtete Kraftkomponente zum Einreißen der Sollbruchstellen 9, 9' im Bereich der Durchbrüche 10 ausreicht, wodurch die Lasche 11 bereichsweise aus der Ebene der Halterung hervortritt. Im weiterer zeitlicher Abfolge wird die Lasche 11 immer weiter herausgeschält, wobei die hierzu erforderliche Kraft durch den Verlauf der Kerbentiefe weiter zunimmt.

Die Halterung 6 ist nach Abschluß der Verformung (Fig. 5) naturgemäß nicht mehr zu verwenden und muß daher ausgetauscht werden.

### Bezugszeichen

- 1: Laderaum
- 2: Kraftfahrzeug
- 3: Sicherheitstrennnetz
- 4: Fahrgastraum
- 5: Halterung (oben)
- 6: Halterung (unten)
- 7: Karosserie
- 8: Bohrung
- 9: Sollbruchstelle
- 10: Durchbruch
- 11: Lasche
- 12: Schenkelende
- 13: Bügel
- 14: Kerbe

## Patentansprüche

1. Halterung (6) zur Befestigung eines Sicherheitstrennnetzes (3) im Laderaum (1) eines Kraftfahrzeugs (2), die im Falle unfallbedingter Überlasten zur Energieabsorption deformierbar ist, **dadurch gekennzeichnet, dass** die Halterung (6) mit einer U-förmigen Anordnung von linienförmigen Sollbruchstellen (9), (9') versehen ist, die eine einstückig in die Halterung integrierte Lasche (11) umgeben, entlang derer sich die mit dem ersten und dem zweiten Bauteil verbundenen Bereiche der Halterung (6) unfallbedingt örtlich voneinander trennen, sodass die Lasche bereichsweise aus der Ebene der Halterung (6) hervortritt.

2. Halterung nach Anspruch 1, **dadurch gekennzeichnet, dass** die Sollbruchstellen (9), (9') als linienförmig verlaufende Kerben (14) in einer plattenförmigen Ausbildung der Halterung (6) ausgeformt sind.

3. Halterung nach Anspruch 2, **dadurch gekennzeichnet, dass** der verbleibende Querschnitt der plattenförmigen Ausbildung im Bereich der Kerben (14) im zuerst trennbaren Bereich der Sollbruchstelle(n) (9) geringer ist als im nachfolgend trennbaren Bereich der Sollbruchstelle(n) (9).

4. Halterung nach Anspruch 3, **dadurch gekennzeichnet, dass** der verbleibende Querschnitt der plattenförmigen Ausbildung über den Verlauf der Sollbruchstelle(n) (9) kontinuierlich, insbesondere linear zunimmt.

5. Halterung nach einem der vorhergehenden Ansprüche, **dadurch gekennzeichnet, dass** der zuerst trennbare Bereich der Sollbruchstelle(n) (9) aus einem Durchbruch (10) durch die Halterung (6) ausmündet.

6. Halterung nach einem der vorhergehenden Ansprüche, **dadurch gekennzeichnet, dass** die Sollbruchstellen (9), (9')U-förmig auf der Halterung (6) angeordnet sind, wobei das erste Bauteil außerhalb der U-förmigen Anordnung und das zweite Bauteil innerhalb, und zwar jenseits der Schenkelenden (12) der U-förmigen Anordnung, mit der Halterung (6) verbunden sind.

7. Halterung nach Anspruch 5, **dadurch gekennzeichnet, dass** die Sollbruchstellen (9), (9') und die Durchbrüche (10) U-förmig auf der Halterung (6) angeordnet sind, wobei das erste Bauteil außerhalb der U-förmigen Anordnung und das zweite Bauteil innerhalb, und zwar jenseits der Schenkelenden (12) der U-förmigen Anordnung, mit der Halterung (6) verbunden sind.

## Claims

1. Mounting (6) for fastening a separating safety net (3) in the load space (1) of a motor vehicle (2), which mounting is deformable for the purpose of absorbing energy in the event of overloads caused by an accident,
**characterised in that** the mounting (6) is provided with a U-shaped arrangement of linear preset breaking points (9), (9') which surround a tongue (11) which is integrated into the mounting in one piece and along which those regions of the mounting (6) which are connected to the first and second components separate from one another locally as a result of an accident, so that the tongue moves out of the plane of the mounting (6) in certain regions.

2. Mounting according to claim 1, **characterised in that** the preset breaking points (9), (9') are formed as linearly extending notches (14) in a plate-shaped formation of the mounting (6).

3. Mounting according to claim 2, **characterised in that** the residual cross-section of the plate-shaped formation in the region of the notches (14) is smaller in that region of the preset breaking point(s) (9) which can be separated first than **in that** region of the preset breaking point(s) (9) which can be separated subsequently.

4. Mounting according to claim 3, **characterised in that** the residual cross-section of the plate-shaped formation increases continuously, in particular linearly, over the course of the preset breaking point(s) (9).

5. Mounting according to one of the preceding claims, **characterised in that** that region of the preset breaking point(s) (9) which can be separated first opens out from an aperture (10) through the mounting (6).

6. Mounting according to one of the preceding claims, **characterised in that** the preset breaking points (9), (9') are arranged in the shape of a U on the mounting (6), the first component being connected to said mounting (6) outside the U-shaped arrangement and the second component being connected to said mounting (6) inside the U-shaped arrangement, that is to say beyond the ends (12) of its legs.

7. Mounting according to claim 5, **characterised in that** the preset breaking points (9), (9') and the apertures (10) are arranged in the shape of a U on the mounting (6), the first component being connected to said mounting (6) outside the U-shaped arrangement and the second component being connected to said mounting (6) inside the U-shaped arrangement, that is to say beyond the ends (12) of its legs.

## Revendications

1. Attache (6) pour la fixation d'un filet de séparation de sécurité (3) dans l'espace de chargement (1) d'un véhicule automobile (2), qui peut être déformée dans le cas de surcharges occasionnées par un accident pour l'absorption d'énergie, **caractérisée en ce que** l'attache (6) est dotée d'un agencement en U de points de rupture théorique linéaires (9), (9'), qui entourent une patte (11) intégrée d'un seul tenant dans l'attache, patte le long de laquelle les zones, reliées au premier et au second composant, de l'attache (6) se séparent localement les unes des autres du fait de l'accident, de sorte que la patte dépasse par endroits du plan de l'attache (6).

2. Attache selon la revendication 1, **caractérisée en ce que** les points de rupture théorique (9), (9') sont formés sous forme d'entailles (14) agencées en forme de ligne dans une conception en forme de panneau de l'attache (6).

3. Attache selon la revendication 2, **caractérisée en ce que** la section restante de la formation en forme de panneau dans la zone des entailles (14) dans la zone pouvant être séparée en premier du (des) point(s) de rupture théorique (9) est plus faible que dans la zone pouvant être séparée par la suite du (des) point(s) de rupture théorique (9).

4. Attache selon la revendication 3, **caractérisée en ce que** la section restante de la formation en forme de panneau augmente de façon continue, en particulier de façon linéaire, par rapport au tracé du (des) point(s) de rupture théorique (9).

5. Attache selon l'une des revendications précédentes, **caractérisée en ce que** la zone pouvant être séparée en premier du (des) point(s) de rupture théorique (9) débouche d'un passage (10) à travers l'attache (6).

6. Attache selon l'une des revendications précédentes, **caractérisée en ce que** les points de rupture théorique (9), (9') sont disposés en forme de U sur l'attache (6), le premier composant et le second composant étant reliés à l'attache (6) respectivement à l'extérieur de l'agencement en U et à l'intérieur, et ce au-delà des extrémités de branches (12) de l'agencement en U.

7. Attache selon la revendication 5, **caractérisée en ce que** les points de rupture théorique (9), (9') et les passages (10) sont disposés en forme de U sur l'attache (6), le premier composant et le second composant étant reliés à l'attache (6) respectivement à l'extérieur de l'agencement en U et à l'intérieur, et ce au-delà des branches d'extrémité (12) de l'agencement en U.
